# EUROPEAN PATENT APPLICATION

(11) **EP 4 651 332 A1**
(43) Date of publication of application: **19.11.2025**
(21) Application number: 24175959.6
(22) Date of filing: 15.05.2024
(51) Int. Cl.: H02J 3/24, H02J 3/38

(54) **CONTROLLING A POWER GENERATION SYSTEM OF A WIND TURBINE**

(71) Applicant: Siemens Gamesa Renewable Energy A/S, 7330 Brande (DK)
(72) Inventor: Knueppel, Thyge, 3500 Værløse (DK); Stoettrup, Michael, 7400 Herning (DK); Solberg, Brian, 2610 Rødovre (DK)
(74) Representative: SGRE-Association

(57) **Abstract**

A method of controlling a power generation system (60) of a wind turbine (1) is provided. The power generation system (60) may be electrically coupled to a power grid (20) and may comprise a generator (10) generating electrical power and a power converter system (30) coupled to the generator (10) and the power grid (20). The method may comprise operating, by a control system, the power generation system (60) in a grid forming operation mode in which the power converter system (30) controls the exchange of electrical power with the power grid (20) to support a grid voltage and/or a grid frequency. The method further comprises limiting a variation of a torque of the generator (10) caused by a variation in electrical output power provided by the power generation system (60) to the power grid (20) by limiting variations of a stabilizing component of the output power and/or limiting variations in a disturbance power required to be supplied by the power generation system (60) to the power grid (20).

## Description

### FIELD OF THE INVENTION

The present invention relates to a method of controlling a power generation system of a wind turbine. It further relates to a computer program for performing such method, and to a control system for carrying out such method.

### BACKGROUND

Conventionally, the grid frequency of a power grid may be controlled by large power plants with synchronous generators, and the inertia of these machines may help to stabilize the power grid to a nominal grid frequency of 50 or 60 Hz. The increasing use of renewable energy sources, e.g. wind turbines or photovoltaic systems, as power generation systems may provide less support for the power grid, since such renewable energy sources create only little or no inertia. Further, the power output of renewable energy sources varies in dependence on current environmental influences. However, with advanced converter control, the grid connected converter of a wind turbine may emulate selected properties of a synchronous generator and operate in a grid forming mode, in which the wind turbine inherently exchanges power with the power grid, in particular in response to a disturbance of grid frequency or phase angle, to continuously support the grid. For example, when new loads are connected to the grid, the grid frequency may drop and the renewable energy source may counteract such disturbance by supplying additional power towards the grid when operating in a grid forming mode.

The amount of disturbance power that is exchanged in the grid forming mode in response to a disturbance on the power grid depends on the grid forming control parameterization and the characteristics of the grid event. A power converter may be, unlike a synchronous machine, a current limited device that is normally operated with only small current margins. It is a power electronic device and, unlike a synchronous generator with its inherent stored kinetic energy in its rotating masses, there may be only very little energy stored in the device. When varying the electrical power to be exchanged between the converter and the grid, the electrical torque of the wind turbine generator may be varied.

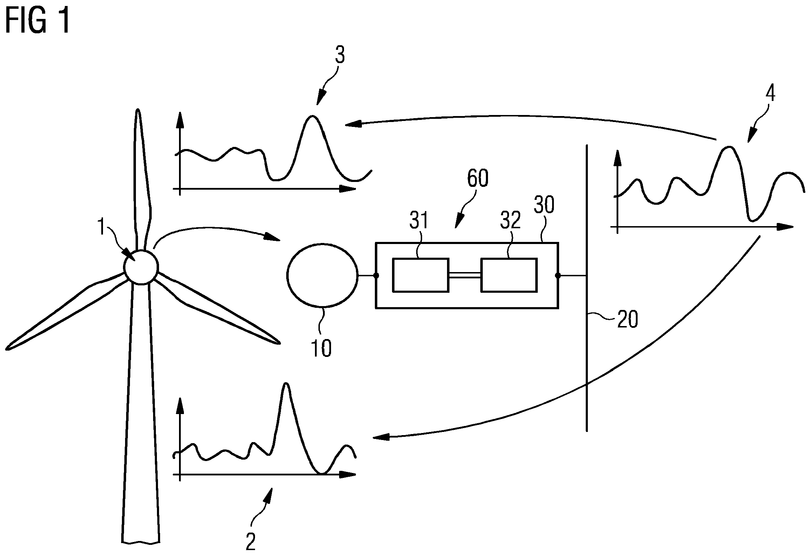

Figure 1 shows a conventional power generation system 60 of a wind turbine 1 which may comprise a converter system 30 and a generator 10. The power generation system 60 may be coupled to the power grid 20. The converter system 30 may comprise a generator-side converter 31 and a grid-side converter 32. As can be seen in the diagram 4 of Fig. 1, disturbances in the grid frequency or angle of the power grid may occur (diagram 4 illustrates grid frequency over time). If the power generation system is operated in a grid forming mode, these disturbances may result in mechanical torque variations of generator 10 due to variation of the power drawn from the generator. Furthermore, as the generator 10 may be coupled to the mechanical structure of the wind turbine 1, the mechanical torque variations caused by the disturbances may be transferred to these structural components, e.g. to the tower (diagram 2, which represents tower deflection over time) and/or in the rotor blades (diagram 3, which represent rotor blade deflection over time). Natural frequencies of the mechanical structures may be excited, which may result in an increased fatigue load on the mechanical structures. This in turn could lead to higher maintenance costs of the wind turbine 1, as components of the mechanical structure may need to be replaced more frequently, or to safety issues, as the excitation of eigenmodes could lead to a complete failure of the components of the mechanical structure.

Furthermore, such disturbances may cause problems regarding the ultimate loads of the mechanical components of the wind turbine. It may also be possible that during a disturbance, the vibrations induced into the mechanical components of the wind turbine build up. These built up vibrations may cause a safety function of an internal monitor, e.g. monitoring the blade vibration levels, to be triggered, which may cause the wind turbine to stop. As a result of this shut down, the wind turbine may be disconnected from the grid and may stop supporting the grid; it may thus no longer be grid compliant.

### SUMMARY

Accordingly, there is the need to mitigate at least some of the drawbacks mentioned above and to improve the control of the operation of a power generation system of a wind turbine.

This need is met by the features of the independent claims. The dependent claims describe embodiments and/or examples of the invention.

According to an aspect of the invention, a method of controlling a power generation system of a wind turbine is provided. The power generation system is electrically coupled to a power grid and comprises a generator generating electrical power and a power converter system coupled to the generator and the power grid, wherein the power converter system converts at least part of electrical power that is exchanged between the generator and the power grid. The method comprises operating, by a control system, the power generation system in a grid forming operation mode in which the power converter system controls the exchange of electrical power with the power grid to support a grid voltage and/or a grid frequency. During a disturbance of the power grid, the supporting of the grid voltage and/or grid frequency requires the power generation system to exchange a disturbance power with the power grid, wherein the exchanged electrical power comprises a stabilizing component that provides at least part of the disturbance power. The method further comprises limiting a variation of a torque of the generator caused by a variation in electrical output power provided by the power generation system to the power grid by limiting variations of the stabilizing component of the output power and/or limiting variations in the disturbance power required to be supplied by the power generation system to the power grid.

By such method, the electrical power exchanged between the power generation system and the power grid may vary only in a predetermined range. The system may therefore be protected from excessive variations when a grid disturbance occurs. A system response may be prevented that would cause the system to operate in a way that may be harmful to or overload the mechanical components of the wind turbine. Therefore, the burden on the mechanical components may be reduced in a controlled way which may result in a higher lifetime of the mechanical components of the wind turbine. Maintenance costs and downtime of the wind turbine may thus be reduced. This may lead to an improve in the energy production by the wind turbine. Also, it may be prevented that mechanical excitations, in particular vibrations, build up and cause a shut down of the wind turbine by triggering mechanical safety systems. In summary, the operation of the power generation system may be improved and unfavorable mechanical loads acting on the mechanical components of the wind turbine, which may occur because of disturbances of the power grid, may be mitigated.

Furthermore, such a method may limit variations in the required disturbance power to be supplied by the generator system to the power grid. This may also protect the mechanical components of the generator.

The limitation of variations of the stabilizing component may be performed by a control system configured to control the power converter system, e.g. a converter controller thereof. The limitation of variations of the disturbance power may be performed by an additional device that is configured to absorb the disturbance power, e.g. by supplying and/or taking up electrical power from the power grid.

The generator may comprise an asynchronous or synchronous generator, e.g. a wound rotor induction generator or a permanent magnet synchronous generator. Preferably, the asynchronous generator may be provided with the power converter system in a doubly fed induction generator topology. The synchronous generator may be provided with the power converter system in a full-converter topology.

The power converter system may comprise a power converter arranged to convert at least part of the electrical power generated by the power generation system. The power converter may convert alternating current (AC) into direct current (DC) and vice versa, e.g. AC to AC. The power converter may adapt the voltage and/or frequency of the converter power to match the power grid. The converter system may comprise back-to-back power converter with a DC-link.

The power converter system may comprise a generator side converter configured to be electrically coupled to the generator and a grid side converter configured to be electrically coupled to the power grid. The grid frequency may be at least one of a frequency of the grid voltage or the grid current. The electrical power may comprise or be active power and/or reactive power.

The stabilizing component may be at least a portion of the exchanged electrical power. It may also be possible that the exchanged electrical power comprises only or consists of the stabilizing component.

The disturbance of the power grid may for example be a deviation of the grid voltage and/or the grid frequency from a pre-event grid voltage and/or grid frequency, e.g. from a nominal grid voltage and/or grid frequency. For example, pre-event (i.e. prior to the occurrence of the disturbance), the power system may be operated at a rated voltage and/or a rated frequency. The disturbance may be a grid voltage and/or a grid frequency that is higher or lower than the respective rated value, e.g. higher or lower than a nominal grid frequency of, e.g., 50 Hz or 60 Hz. The disturbance may for example be a frequency fluctuation or a voltage sag.

The stabilizing component may be, while the power generation system is connected to the power grid, a power difference between the (actual) electrical power that is exchanged between the power generation system and the grid and a reference electrical power (e.g. active power setpoint) that is to be exchanged. In other words, the power generation system may provide more or less power to the power grid than its actual power reference (setpoint), and this difference may be the stabilizing component that stabilizes the power grid.

According to an example, the limiting of the variations of the stabilizing component and/or of the disturbance power may be performed for variations within a predetermined frequency range, wherein the predetermined frequency range comprises one or more natural frequencies of one or more mechanical components of the wind turbine mechanically coupled to the generator.

The one or more natural frequencies of one or more mechanical components of the wind turbine may also be termed eigenfrequencies.

By limiting the variations of the stabilizing component and/or of the disturbance power in a frequency range that comprises the natural frequencies of the one or more mechanical components, torque variations of the generator in this frequency range may be reduced, thus reducing the risk of exciting mechanical modes of these components, such as blade modes or tower modes. The frequency range may be selected in a way so that it corresponds to the expected mechanical vibration frequencies of the mechanical parts that are mechanically coupled to the power generation system of the wind turbine, e.g. the generator. Thus, the risk of excitation of eigenfrequencies that are deemed to lead to an increased fatigue loading of the mechanical components of the wind turbine due to power grid disturbances may be reduced. The predetermined range of frequencies may be a fixed range of frequencies determined upfront for the mechanical configuration or may be a dynamic range of frequencies determined according to current operating conditions, e.g. wind speed, for example based on operating conditions that impact the excitation of mechanical modes of the wind turbine components.

Outside the frequency range, the stabilizing component may not be limited for the purpose of reducing torque variations on the generator. Other limitations, e.g. due to the electrical limits of the power converter, may certainly apply. For example, limitations due to the structure of the power converter, as described in the document WO 2023222761 A1, may additionally be employed. The content of the disclosure WO 2023222761 A1 is hereby incorporated in this application by reference.

The predetermined frequency range may be a range below 20 Hz, preferably below 15 Hz, more preferably below 10 Hz. The frequency range may be selected to comprise one or a combination of a natural frequency of a tower, a natural frequency of a blade, and a natural frequency of a (part of a) power generation system, in particular of a drive train.

In an example, the natural frequency of the tower may be smaller than 1 Hz. In particular, the natural frequencies of the tower may be in a range of 0.05 to 1 Hz, e.g. at values of 0.3 Hz or 0.1 Hz. The natural frequencies of the power generation system may be smaller than 15 Hz, e.g. in a range of 1-10 Hz. The natural frequencies of a blade may be smaller than 15 Hz. In particular, the natural frequencies of the blade may be in a range of 0.5 to 10 Hz.

The predetermined frequency range may for example be comprised in the range between 0.01 and 20 Hz, preferably between 0.05 and 15 Hz, e.g. between 0.05 and 12 Hz. If excitation of higher harmonics of the mechanical modes of the one or more structural components is to be reduced, the frequency range may extend up to higher frequencies, e.g. to frequencies below 50 Hz.

According to an example, the limiting of the variations of the stabilizing component of the output power may comprise at least one of limiting variations of a current reference of current control loop of the control system; changing an operation of the power generation system from the grid forming operation mode towards or into a grid following operation mode; and increasing a tracking speed by which a power control loop of the control system tracks a power reference for the output power of the power generation system.

Limiting variations of a current reference of a current control loop of the control system may comprise setting an upper limit for the variation of the current reference (which is typically generated internally, e.g. based on a virtual synchronous machine control scheme). The selected upper limit may be set for the predetermined frequency range. For example, variations of the reference within the frequency range may be damped, and/or an absolute upper limit for the current reference may be applied. By such limitation of the current reference, the variations of the torque of the generator to counteract the variation of the disturbance of the power grid may be limited, as variations in the power drawn from the generator are limited.

Changing the operation of the power generation system into a grid following operation mode may avoid the introduction of the power variation due to the power disturbances of the power grid into the power generation system, such that these power disturbances are not transferred as variations of torque to the generator and thus also to the components of the wind turbine. In grid following operation, the operation typically follows closely the setpoints of the wind turbine control, e.g. a power setpoint, so that output power of the generator remains relatively constant, thereby mitigating torque variations.

Increasing the tracking speed of the power control loop may result in that the output power of the power generation system, and thus of the generator, more closely follows a given power reference, e.g. of a wind turbine control. This essentially moves operation from grid forming more towards grid following, as indicated above, whereby torque variations at the generator are reduced.

According to an example, said limiting of the variations of the stabilizing component of the output power is performed if a level of the variations of the stabilizing component exceeds a predetermined threshold. The predetermined threshold may be selected such that variations of the stabilizing component prevent the excitation of natural frequencies of the mechanical structure. Below the threshold, the providing of grid support may thereby be improved. In an example, the limiting of the variations of the stabilizing power is performed if the stabilizing power and/or the disturbance power exceeds a power threshold.

According to an example, the predetermined threshold may be selected such that variations of the torque of the generator corresponding to the level of the variations of the stabilizing component at the predetermined threshold are below a predetermined torque limit. The predetermined torque limit may be selected such that the mechanical torque variations are below a limit deemed unproblematic for the mechanical structure coupled to the generator. Thus, an increased fatigue loading of the mechanical structure may be prevented.

In an example, the limiting of the variations of the stabilizing component may comprise one or a combination of setting a limit for the stabilizing component or for the variations of the stabilizing component; dynamically reducing a limit for the stabilizing component or for the variations of the stabilizing component; or blocking the stabilizing component. The limit may be reduced stepwise. It may also be possible to gradually reduce the limit. Furthermore, it may be possible to reduce the limit both gradually and stepwise. Blocking the stabilizing component may essentially mean that the power converter system operates in a grid following mode and grid support is no longer be provided. Limiting the stabilizing component or its variations may in particular occur by applying one or more respective limits to the stabilizing component, in particular by keeping the stabilizing component within one or more predefined or dynamic limits.

The limiting, dynamically reducing the limit, and/or blocking may be performed by the control system that controls the power generation system, and the control system may be configured to implement one, two or all three of these control functions. It may for example be configured to perform at least the limiting function, or at least the dynamic reduction of the limit and the blocking functions or may be configured to be capable of performing the limiting, the blocking and the dynamic reduction of the limit functions, or any other combination. Which function is performed may for example depend on one or a combination of properties of the disturbance, operating parameters of the power generation system and a setting of the control system.

According to an example, an energy storage device is coupled to the power grid, wherein the limiting of the variations in the disturbance power required to be supplied to the power grid comprises absorbing at least part of the disturbance power from the power grid by the energy storage device.

The energy storage device may be configured to absorb the disturbance power by supplying electrical power to the power grid and/or by storing electric power from the power grid. Whether power is to be supplied or stored may generally depend on the type of disturbance (e.g. grid frequency drop or increase). The energy storage device may thus provide a stabilizing component that provides the at least part of the disturbance power, e.g. alone or in addition to the stabilizing component provided by the power generating system.

This may allow buffering the at least part of the disturbance power of the power grid by using the energy storage device. As a result, the operation of the power generation system may not be limited upon occurrence of a disturbance on the power grid. Excessive torque variations of the power generation system may thus be avoided while grid support can be provided.

According to an example, the limiting of the variations of the stabilizing component may be performed upon determining that the power storage device is incapable of absorbing the at least part of the disturbance power from the power grid. Thus, the limitation of the variations of the stabilizing component may only be performed, if the storage device is incapable of absorbing at least part of the disturbance power. Thus, grid forming operation of the power generation system may be upheld even if variations of the disturbance power of the power grid are present.

For example, the energy storage device may be incapable of absorbing at least part of the disturbance power due to being saturated (meaning that the energy storage device may be fully charged or completely discharged), being unavailable, and/or if the energy storage device is faulty.

In an example, one part of disturbance power may be supplied by the energy storage device and one part of the disturbance power may be provided by the stabilizing component supplied by the power generation system. It may also be possible that the disturbance power is only supplied by energy storage device. Furthermore, it may be possible that the disturbance power may only be supplied by the stabilizing component supplied by the power generation system.

According to an example, the energy storage device may be operated continuously to absorb the at least part of the disturbance power, and/or the energy storage device may be operated to absorb the at least part of the disturbance power if a level of the required disturbance power exceeds a predetermined threshold.

The energy storage device may act as a buffer such that the variation of the torque of the generator may be kept as small as possible. By operating the energy storage device continuously, this buffer may continuously reduce the torque variations. This may prevent an increased fatigue loading of the mechanical components of the generator. If the energy storage device is only operated if the disturbance power exceeds the power threshold, capacity of the energy storage device may be preserved for severe grid disturbances.

According to an example, the energy storage device is comprised in the energy generation system and is preferably coupled or connected to a DC link of the power converter system or to an AC side of the power converter system, and/or the energy storage device is coupled or connected to a collector grid of a wind farm to which the wind turbine provides its output power (e.g. at an output of the wind turbine), and/or the power storage device is coupled or connected to a point of common coupling, PCC, of a wind farm that comprise the wind turbine, at which the wind farm is coupled to the power grid.

Accordingly, the energy storage device may be placed at any suitable position, such that an easy implementation into the already existing setup of the wind turbine or wind farm may be realized. Furthermore, by installing the energy storage device at the point of common coupling of the wind farm, the variation of the power disturbance of the power grid may be counteracted before the power disturbance of the power grid is transferred to the power generation system of the wind turbine.

If the energy storage device is provided in the wind turbine, the control may be performed by a controller of the control system comprised in the wind turbine. If the energy storage device is provided on a wind farm level, e.g. coupled to collector grid or to the PCC, the control may be performed by a wind farm controller.

In an example, the method may further comprise determining if the providing of the stabilizing component is to be enforced, and if the providing of the stabilizing component is to be enforced and if the variations of the stabilizing component to be provided by the power generation system are above a threshold, in particular in the predetermined frequency range, stopping the wind turbine. Such enforcement of the stabilizing component may be due to enforcement by the applicable grid code, enforcement by command from a grid operator or the like. That the variations of the stabilizing component are above a threshold may mean that variations of the generator torque are above a threshold. By stopping, e.g. shutting down, the wind turbine in case that the stabilizing component cannot be reduced, building up of vibrations and damage to structural components of the wind turbine may be avoided.

According to an example, the limiting of the variations of the stabilizing component may be performed by a controller of the control system that forms part of the wind turbine and/or by a wind farm controller of the control system that provides control instructions to a wind turbine controller of the wind turbine. Implementation of the method into an existing control system of the wind turbine and/or wind farm may thereby be facilitated. Furthermore, by using an energy storage device on a wind farm level, a cost-effective implementation of the control system into the setup may be realized.

In an example, the wind turbine controller may form part of the control system.

In an example, if the energy storage device is provided and controlled on a wind farm level, the limitation of the stabilizing component of the output power may be performed by a controller of wind turbine, or may be performed by a controller of the wind farm by sending commands to an individual wind turbine controller. Using the controller of the wind farm to limit the stabilizing component of the output power may allow limiting the stabilizing component provided by the wind turbines in a coordinated manner. It may be possible to reduce the stabilizing component for some wind turbines and increasing the stabilizing component for other wind turbines.

According to an example, the control system may monitor the stabilizing component and/or the disturbance power required to be provided by the wind turbine to the power grid. The limiting of the variations of the stabilizing component and/or the limiting of the variations in the disturbance power may be based on the monitored stabilizing component and/or disturbance power.

According to an example, monitoring the stabilizing component may comprise monitoring a difference between an output power setpoint of the power generation system and a measured power output of the power generation system. Preferably, the method may further comprise filtering the difference before the stabilizing component is determined. The reference power and the monitored power may be but are not limited to a reference active power and a monitored active power, respectively. The filter may for example be a low-pass filter or band-pass filter, in particular a mean filter or a moving average filter. Such method may be beneficial, since the disturbance power may be computed based on intermediate results that are available in the control system of the power generation system. Thus, the computation performance may be increased. Optionally, the filtering may filter for high frequency related signal parts of the disturbance power such that the system is prevented from responding to signal parts that are for example related to noise. Accordingly, the system may operate more efficiently.

According to another aspect of the invention, a control system for controlling a power generation system of a wind turbine is provided. The power generation system is electrically coupled to a power grid and comprises a generator generating electrical power and a power converter system coupled to the generator and the power grid, wherein the power converter system converts at least part of electrical power that is exchanged between the generator and the power grid. The control system is configured to perform any of the methods described herein.

The control system may for example comprise a processing unit and a memory, the memory storing control instructions which when executed by the processing unit of the control system, cause the control system to perform any of the methods described herein.

The control system may comprise a plurality of control systems. The plurality of control systems may be communicatively coupled with each other and/or the control systems may be comprised by one or more components of the power generation system. Each of the plurality of control systems may comprise a processing unit and a memory unit. The control system may be configured to perform any of the methods described herein, wherein steps of the method may be performed distributed over the plurality of control systems.

For example, the control system may comprise a power controller configured to control an operation of the power generation unit and/or of the overall power generation system, and a converter system controller (e.g. converter control unit, CCU) configured to control an operation of the converter system. In particular, in the case of a wind turbine, the control system may comprise a power controller in form of a wind turbine controller configured to control the operation of the wind turbine (which may comprise the providing of a power reference) and a converter controller configured to control an operation of the converter system.

According to another aspect of the invention, a computer program for controlling a power generation system is provided. The computer program may comprise control instructions which, when executed by one or more processing units of a control system, cause the one or more processing units to perform any of the herein described methods. The computer program may be provided on a volatile or nonvolatile storage medium or data carrier.

It is to be understood that the features mentioned above and those yet to be explained below can be used not only in the respective combinations indicated, but also in other combinations or in isolation, without leaving the scope of the present invention. In particular, the features of the different aspects, embodiments and/or examples of the invention can be combined with each other unless noted to the contrary.

### BRIEF DESCRIPTION OF THE DRAWINGS

The forgoing and other features and advantages of the invention will become further apparent from the following detailed description read in conjunction with the accompanying drawings. In the drawings, like reference numerals refer to like elements.
Fig. 1 is a schematic drawing illustrating a conventional setup of a power generation system.
Fig. 2 is a schematic drawing showing a wind park including a control system according to an example of the invention.
Fig. 3 is a schematic flow diagram illustrating a method of controlling a power generation system of a wind turbine according to an example of the invention.
Fig. 4 is a schematic drawing illustrating a power generation system including a control system according to an example of the invention.

### DETAILED DESCRIPTION

In the following, embodiments and/or examples of the invention will be described in detail with reference to the accompanying drawings. It is to be understood that the following description of the embodiments and/or examples is given only for the purpose of illustration and is not to be taken in a limiting sense. It should be noted that the drawings are to be regarded as being schematic representations only, and elements in the drawings are not necessarily to scale with each other. Rather, the representation of the various elements is chosen such that their function and general purpose become apparent to a person skilled in the art. As used herein, the singular forms "a," "an," and "the" are intended to include the plural forms as well, unless the context clearly indicates otherwise. The terms "comprising," "having," "including," and "containing" are to be construed as open-ended terms (i.e., meaning "including, but not limited to,") unless otherwise noted.

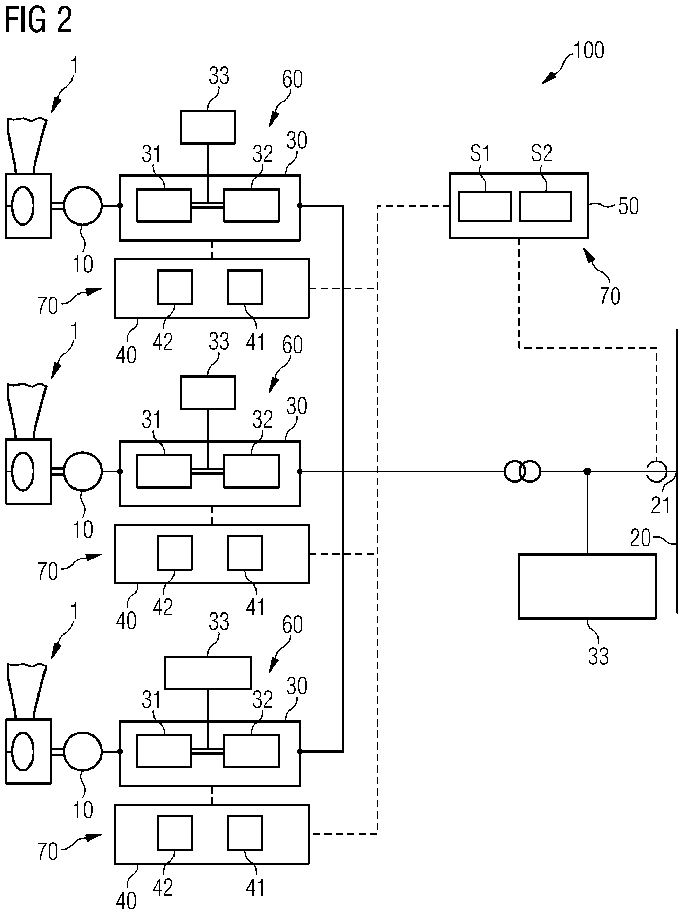

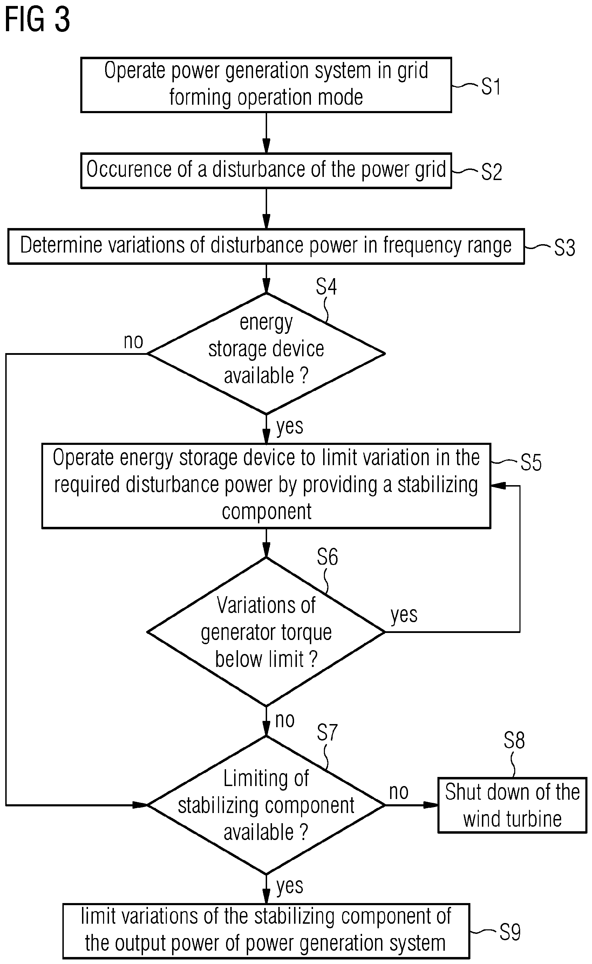

Fig. 2 illustrates a wind farm 100 comprising plural wind turbines 1 according to an example, wherein the wind park comprises a control system 70 including a controller 40 and/or a wind farm controller 50. An example of the method that may be carried out by the control system 70 is shown in Fig. 3. Both figures will be described in more detail in combination in the following. The individual power output of the plural wind turbines 1 of the wind farm 100 may be collected and may be provided to the power grid 20 at a point of common coupling (PCC) 21. A wind turbine (or each) may comprise a power generation system 60 and a controller 40. The controller 40 may control an operation of the power generation system 60. The power generation system 60 may be coupled to a power grid 20 (via a wind turbine transformer (not shown) and the collector grid) and may exchange electrical power with the power grid 20.

The electrical power may comprise active and/or reactive power. The power generation system 60 may be operated in a grid forming mode by controller 40 in which the electrical power may comprise a stabilizing component that is exchanged with the power grid 20 when a grid disturbance occurs. The power generation system 60 may comprise a generator 10 and a converter system 30. The power generation system 60 may generate/export and/or consume/import electrical power. The converter system 30 may convert at least a portion of or all of the electrical power that is exchanged with the power grid 20. The converter system 30 may comprise a grid-side converter 32 and a generator-side converter 31. The converter system 30 and/or the generator 10 may be controlled by the controller 40.

The controller 40 may comprise a wind turbine controller 41 and a converter controller 42. Each of the controllers 41, 42 may comprise a processing unit and a memory unit. The wind turbine controller 41 may control the wind turbine according to a maximum power point tracking (MPPT) scheme and may provide a respective active power reference to the converter controller. The converter controller 42 may control an operation of the converter system 30. The converter controller 42 may comprise an outer control loop for the power reference and inner voltage and optionally current control loops. Controllers 41, 42 may be communicatively coupled to each other.

In the present example, a setup in a full converter topology is shown. However, the solutions disclosed herein also apply to a doubly fed induction generator (DFIG) topology or any other known power generation topology.

An energy storage device 33, such as a battery or other storage device, may further be provided. Energy storage device 33 may be provided in wind turbine 1, e.g. as part of the power generation system 60. Additionally or alternatively, the energy storage device 33 may be provided on a wind farm level, e.g. coupled or connected to the collector grid (e.g. at an output of wind turbine 1) or to the PCC 21, as shown in Fig. 2. For example, the energy storage may comprise a turbine energy storage system (TESS).

Energy storage device 33 may be configured to counteract a disturbance in the power grid. The energy storage device 33 may be coupled or connected to a DC link of the power converter system 30 or to an AC side of the power converter system 30 and may be configured to absorb at least part of the disturbance power from the power grid 20. Coupling of the energy storage device 33 to the DC link of the power converter system 30 may facilitate control thereof and may allow an effective decoupling from the operation of power generation system 60. The energy storage device may exchange electrical power with the power grid to provide grid stabilization; it may thus provide a further stabilizing component in response to a grid disturbance. The power generating system 60 and the energy storage device 33 may thus each provide a stabilizing component in response to a grid disturbance. This may allow relieving the power system 60 from the need to provide the stabilizing component in a frequency range in which the mechanical modes of the structural wind turbine components lie.

The converter system 30 may convert electrical power that is bidirectionally exchanged between the generator 10 and the power grid 20. In a first step S1, the converter system 30 may be operated in a grid forming mode in which the converter system 30 is controlled so as to behave as a voltage source. The voltage source may be controlled in frequency and in amplitude and the impedance may be emulated, a real impedance may be employed or a combination of both. The grid side converter 32 may be controlled using a virtual synchronous generator (VSG) control scheme. For a DFIG topology, the generator (rotor) side converter may be controlled in accordance with a corresponding VSM scheme. Accordingly, the power generation system 60 may be operated so as to maintain a voltage amplitude, a voltage frequency and/or a voltage phase angle to control the electrical (active and reactive) power being exchanged with the power grid 20.

In step S2, the power grid 20 is disturbed. Such disturbance may for example comprise a deviation of an actual grid voltage or an actual grid frequency from a pre-event grid voltage or a pre-event grid frequency, respectively, in particular from nominal voltage and frequency values of the grid.

In step S3 and upon the occurrence of the disturbance of the power grid 20, the control system may determine the variations of the disturbance power in a predetermined frequency range. The severity of the disturbance may be determined by the control system in the frequency range (e.g., by determining if the signal power in the frequency range is above a limit).

Depending on the severity of the disturbance, the disturbances may be translated into significant torque variations on the generator and thus into load variations on the mechanical structure that is coupled to the power generation system 60, e.g. the blades or the tower of the wind turbine 1. If the frequency of the disturbances overlaps with natural frequencies, also referred as eigenfrequencies, of the mechanical structure of the wind turbine 1, there may be an excitation of respective structural oscillations and thus an increased fatigue load on the mechanical structure. In the worst case, the overlapping of the disturbances may lead to a complete failure of the component of the mechanical structure. This may lead to higher maintenance costs of the wind turbine 1, as the components of the mechanical structure need to be replaced more frequently, or to safety issues.

When the converter system 30 is operated in the grid forming mode, an uncontrolled inherent response (e.g. without evaluating for system feasibility and/or without limiting) of the power generation system 60 to a grid disturbance in order to support the power grid may thus be disadvantageous, as a response to the disturbance may result in significant torque variations (large grid events) and/or attract eigenmodes of the mechanical components of the wind turbine 1. In order to avoid that the power generation system 60 is shifted into such unfavorable operation, the control system 70 introduces limitations into the control and attempts to supply the disturbance power from the energy storage device 33.

In step S4, it is determined if the energy storage device 33 is available. If the energy storage 33 is not available, the method continues at step S7. The energy storage device 33 may not be available if it is, e.g., incapable to absorb at least part of the disturbance power for example due to being saturated, meaning that the energy storage device 33 may be fully charged or completely discharged, being shut down or disconnected, or if the energy storage 33 is faulty.

If the energy storage device 33 is available, it may be operated in step S5 in order to limit the disturbance power required from power generation system 60 by providing a stabilization component, i.e. by exchanging electrical power with the power grid to at least partially absorb the grid disturbance. The energy storage device 33 may be configured to absorb the disturbance by supplying electrical power to the power grid 20 or storing electrical power from the power grid 20, depending on the type of disturbance. The providing of the stabilizing component by the energy storage device may result in that the power variations experienced during grid forming operation by the power generating system 60 and in particular the generator 10 thereof are reduced significantly. Operation of the energy storage device 33 may thus result in a reduction of torque variations at the generator 10.

In step S6, it may be determined if the variations of generator torque are below a preset limit. Such limit may correspond to variations deemed unproblematic with respect to the introduction of mechanical oscillations on wind turbine components. If this is the case, further measures may not be necessary. The method returns to step S5 and the energy storage device 33 continues to be operated to absorb the at least part of the disturbance power.

If the power disturbance is no longer present, or the required disturbance power is below a preset limit, the energy storage device 33 may then be deactivated, and the method may return to step S1 (not shown in Fig. 3). In other examples, the energy storage device 33 may always be operated.

If it is determined in step S6 that the variations of the generator torque are not below the preset limit, or if it is determined in step S4 that the energy storage device 33 is incapable to absorb at least part of the disturbance power as it is not available, the method may continue in step S7 by checking if a limitation of the stabilizing component provided by the grid forming operation of the power generating system 60 is available. In some situations, e.g. if the grid code or a grid operator mandatorily requires the stabilization of the power grid by providing the stabilizing component, it may not be possible to limit the stabilizing component. The stabilizing component may be enforced in such situation, as for example described in WO 2023222761 A1. In a next step S7, it may be determined if this limitation is available.

If it is determined in step S7 that the limitation of the stabilizing component of the output power of the power generation system 60 is not available, the wind turbine 1 may be shut down in step S8 in order to avoid that the torque variation caused by the disturbances of the power grid 20 leads to large mechanical vibrations and/or eigenmodes in the mechanical structure. The wind turbine 1 may also be shut down if both the energy storage device 33 and the limitation of the stabilizing component of the output power of the power generation system 60 are not available when disturbances in the power grid 20 are occurring. The wind turbine 1 may thus be protected from damage.

If it is determined in step S7 that the limitation is available, the control system may limit the variations of the stabilizing component exchanged between the power generation system 60 and the power grid in step S9. The limitation my for example occur within a predetermined frequency range such that no eigenfrequencies of the mechanical components of the wind turbine 1 are excited. The limiting the variations of the stabilizing component of the output power may occur by applying an (absolute) upper limit to the stabilizing component, by limiting a rate of change of the stabilizing component, by limiting the stabilizing component only for the predetermined frequency range, and the like.

Limiting the stabilizing component may comprise limiting variations of a current reference of a (inner) current control loop of the control system by which the power converter system 30 is controlled (if such current control loop is present). For example, the current reference may be filtered by a filter (e.g. a band-pass filter) that filters out frequency components of the predetermined frequency range. As a specific example, a high-pass filter or a bandstop filter may be used to filter out frequencies that may be considered problematic for the mechanical components of the wind turbine. Such limiting of the current reference may limit variations in the current drawn from the generator, and may thus limit torque variations on the generator. In another example, to provide the limiting, the operation of the power generation system 60 may be changed from the grid forming operation mode towards or into a grid following operation mode. For example, the tracking speed by which a (outer) power control loop of the control system tracks a power reference (which may be provided by a wind turbine controller) for the output power of the power generation system 60 may be increased, so that power is drawn from the generator in accordance with the power reference. The power drawn from the generator may thus be rather constant, thereby reducing torque variations. Mechanical transfer of the torque variations into the structure of the wind turbine may thus be reduced significantly.

Again, if the disturbance of the power grid is no longer present or below a limit, the limitation applied in step S9 may be released again and the method may return to step S1 (not shown in Fig. 3). As another example, if the variation in the disturbance power required to be supplied to the power grid drop below a threshold, the limitation of step S9 may be released and the disturbance power may only be provide by the energy storage device 33. The method may thus return to step S5 if the energy storage device is available.

Converter control and ways in which a stabilizing component may be limited in a grid forming mode are described in the document WO 2023222761 A1, and the converter control used by control system 60 may be configured in a similar way. The limitations described in this document may be applied in addition to the limitations of the stabilizing component described herein.

Steps of the method may be caried out simultaneously or in a different order. The energy storage device 33, if available, may for example additionally be operated to absorb at least part of the disturbance power. Preferably, one part of disturbance power may then be supplied by the energy storage device 33 and one part of the disturbance power may be provided by the stabilizing component supplied by the power generation system 60.

If, the energy storage device 33 is provided and controlled on wind farm level, the limitation of the stabilizing component supplied by the power generation system 60 may be performed by the controller 40 of the individual wind turbines 1 of the wind farm 100 (e.g. by monitoring the stabilizing component) or by a controller 50 of the wind farm 100 by sending commands to individual wind turbine controllers 40.

The control system 70, for example the controller 50 of the wind farm and/or the controller 40 of the wind turbine 1, may comprise a processing unit 51 and a memory unit 52, wherein the memory unit 52 may store control instruction which when executed by the processing unit 51, perform any of the methods disclosed herein. The control system 70 may comprise plural processing units 51 and memories 52 distributed throughout the control system, e.g. at each of the controllers 40, 50. The processing unit 51 may for example comprise a digital signal processor, an application specific integrated circuit, a field programmable gate array, a microprocessor or the like. The memory 52 may comprise RAM, ROM, flash memory, a hard disk drive and the like. Control system 70 may comprise further components common to a computing system, such as input/output interfaces, internal busses interfacing the components of the system, a user interface and the like.

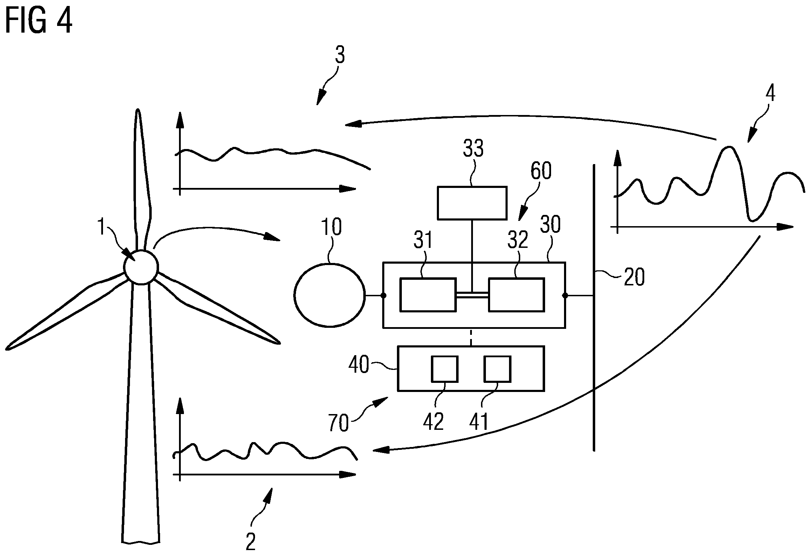

Fig. 4 shows the structural modes on the blades (diagram 3) and of the tower (diagram 2) in response to frequency disturbances on the power grid (diagram 4) if the method and/or control system in accordance with the above examples are employed. As shown in Fig. 4, such configuration of the control system may prevent that disturbances present in the power grid (diagram 4) are transferred via the power generation system 60 to the mechanical components of the wind turbine 1 coupled to the power generation system 60. Thus, mechanical oscillations of the tower or the blades due to disturbances in the power grid may be reduced, as shown in diagrams 2 and 3, respectively (comparison is made to the operation without such control, as illustrated in the diagrams of Fig. 1). Accordingly, fatigue loading of these mechanical components of the wind turbine 1 may be reduced significantly. This may lead to a safer operation and to lower maintenance requirements and costs for the mechanical components of the wind turbine 1.

While specific embodiments and/or examples are disclosed herein, various changes and modifications can be made without departing from the scope of the invention. The present embodiments and/or examples are to be considered in all respects as illustrative and non-restrictive, and all changes coming within the meaning and equivalency range of the appended claims are intended to be embraced therein.

## Claims

1. A method of controlling a power generation system (60) of a wind turbine (1), wherein the power generation system (60) is electrically coupled to a power grid (20) and comprises a generator (10) generating electrical power and a power converter system (30) coupled to the generator (10) and the power grid (20), wherein the power converter system (30) converts at least part of electrical power that is exchanged between the generator (10) and the power grid (20), wherein the method comprises:
operating, by a control system, the power generation system (60) in a grid forming operation mode in which the power converter system (30) controls the exchange of electrical power with the power grid (20) to support a grid voltage and/or a grid frequency, wherein during a disturbance of the power grid (20) the supporting of the grid voltage and/or grid frequency requires the exchange of a disturbance power with the power grid (20), wherein the exchanged electrical power comprises a stabilizing component that provides at least part of the disturbance power; and
limiting a variation of a torque of the generator (10) caused by a variation in electrical output power provided by the power generation system (60) to the power grid (20) by limiting variations of the stabilizing component of the output power and/or limiting variations in the disturbance power required to be supplied by the power generation system (60) to the power grid (20).

2. The method according to any of the preceding claims, wherein the limiting of the variations of the stabilizing component and/or of the disturbance power is performed for variations within a predetermined frequency range,
wherein the predetermined frequency range comprises one or more natural frequencies of one or more mechanical components of the wind turbine (1) mechanically coupled to the generator (10) .

3. The method according to any of the preceding claims, wherein the limiting of the variations of the stabilizing component of the output power comprises at least one of limiting variations of a current reference of current control loop of the control system; changing an operation of the power generation system (60) from the grid forming operation mode towards or into a grid following operation mode; and increasing a tracking speed by which a power control loop of the control system (40) tracks a power reference for the output power of the power generation system (60).

4. The method according to any of the preceding claims, wherein said limiting of the variations of the stabilizing component of the output power is performed if a level of the variations of the stabilizing component exceeds a predetermined threshold.

5. The method according to claim 4, wherein the predetermined threshold is selected such that variations of the torque of the generator (10) corresponding to the level of the variations of the stabilizing component at the predetermined threshold are below a predetermined torque limit.

6. The method according to any of the preceding claims, wherein the limiting of the variations of the stabilizing component comprises one or a combination of setting a limit for the stabilizing component or for the variations of the stabilizing component; dynamically reducing a limit for the stabilizing component or for the variations of the stabilizing component; or blocking the stabilizing component.

7. The method according to any of the preceding claims, wherein an energy storage device (33) is coupled to the power grid, wherein the limiting of variations in the disturbance power required to be supplied to the power grid (20) comprises absorbing at least part of the disturbance power from the power grid (20) by the energy storage device (33).

8. The method according to claim 7, wherein the limiting of the variations of the stabilizing component is performed upon determining that the energy storage device (33) is incapable of absorbing the at least part of the disturbance power from the power grid (20).

9. The method according to any of claims 7 or 8, wherein the energy storage device (33) is operated continuously to absorb the at least part of the disturbance power, and/or wherein the energy storage device (33) is operated to absorb the at least part of the disturbance power if a level of the required disturbance power exceeds a predetermined threshold.

10. The method according to any of claims 7-9, wherein the energy storage device (33) is comprised in the energy generation system and is preferably coupled or connected to a DC link of the power converter system (30) or to an AC side of the power converter system (30), and/or wherein the energy storage device (33) is coupled or connected to a collector grid of a wind farm (100) to which the wind turbine (1) provides its output power, and/or wherein the energy storage device (33) is coupled or connected to a point of common coupling (21), PCC, of a wind farm (100) that comprise the wind turbine (1).

11. The method according to any of the preceding claims, wherein the limiting of the variations of the stabilizing component is performed by a controller (40) of the control system that forms part of the wind turbine (1) and/or by a wind farm controller (50) of the control system that provides control instructions to a wind turbine controller (40) of the wind turbine (1).

12. The method according to any of the preceding claims, wherein the control system monitors the stabilizing component and/or the disturbance power required to be provided by the wind turbine (1) to the power grid (20), wherein the limiting of the variations of the stabilizing component and/or the limiting of the variations in the disturbance power is based on the monitored stabilizing component and/or disturbance power.

13. The method according to any of the preceding claims, wherein monitoring the stabilizing component comprises monitoring a difference between an output power setpoint of the power generation system (60) and a measured power output of the power generation system (60).

14. A control system for controlling a power generation system (60) of a wind turbine (1), wherein the power generation system (60) is electrically coupled to a power grid (20) and comprises a generator (10) generating electrical power and a power converter system (30) coupled to the generator (10) and the power grid (20), wherein the power converter system (30) converts at least part of electrical power that is exchanged between the generator (10) and the power grid (20), wherein the control system is configured to perform the method according to any of claims 1-13.

15. A computer program for controlling a power generation system (60) of a wind turbine (1), wherein the computer program comprises control instructions which, when executed by one or more processing units of a control system that controls the power generation system (60), cause the one or more processing units to perform the method according to any of claims 1-13.
